# EUROPEAN PATENT APPLICATION

(11) **EP 1 845 457 A1**
(43) Date of publication of application: **17.10.2007**
(21) Application number: 06007674.2
(22) Date of filing: 12.04.2006
(51) Int. Cl.: G06F 17/30

(54) **Document management architecture**

(71) Applicant: Tietoenator Oyj, 02631 Espoo (FI)
(72) Inventor: Majuri, Juha, 00250 Helsinki (FI)
(74) Representative: Helino, Timo Kalervo

(57) **Abstract**

The invention discloses a solution in which a request from a XML document management client is received and it should be forwarded to an XML document management server. The XML document management server (204, 206, 208) among a set of XML document management servers (204, 206, 208) of a particular type to which the request is to be forwarded, is selected based on a predetermined rule.

## Description

### FIELD OF THE INVENTION

The present invention relates to the OMA (Open Mobile Alliance) XML (Extensible Markup Language) Document Management (XDM). Particularly, the invention relates to a novel and improved method, system, aggregation proxy, and computer program for handling a request in an XML document management architecture. Furthermore, the invention relates to a novel and improved method and computer program for managing data records.

### BACKGROUND OF THE INVENTION

The OMA (Open Mobile Alliance) XML (Extensible Markup Language) Document Management (XDM) defines a common mechanism that makes user-specific service-related information accessible to the service enablers that need them. Such information is expected to be stored in the network where it can be located, accessed and manipulated (created, changed, deleted, etc.). XDM specifies how such information will be defined in well-structured XML documents, as well as the common protocol for access and manipulation of such XML documents. The XML Configuration Access Protocol (XCAP), as defined by IETF (Internet Engineering Task Force), has been chosen as the common XML document.

The current XDM Specification (OMA-TS-XDM_Core-V1_0-20051122-C) defines two main features:
- The common protocol, XML Configuration Access Protocol (XCAP), by which principals can store and manipulate their service-related data, stored in a network as XML documents.
- The SIP (Session Initiation Protocol) sub-scription/notification mechanism by which principals can be notified of changes to such documents.

Documents accessed and manipulated via XCAP are stored in logical repositories in the network, called XML Document Management Servers (XDMS). Each repository may be associated with a functional entity which uses its data to perform its functions. For example, a POC (Push to talk Over Cellular) server accesses a POC XDMS to obtain a particular type of user document, a POC Group document, which provides the member list for a POC group session, and uses this information to invite such members for a POC session.

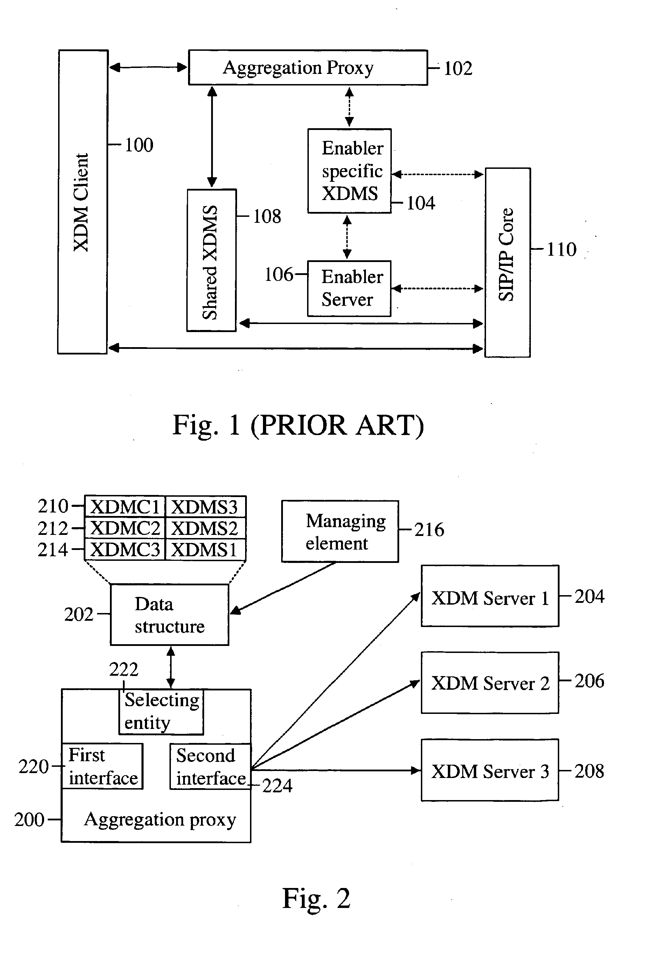

Figure 1 discloses a prior art XML document management architecture. An XML Document Management client (XDMC) 100 is a client entity that provides access to the various XDMS features. The XDMC 100 can be implemented in both terminal and server entities. An aggregation proxy (AP) 102 is the contact point for the XDM client 100 implemented in user equipment (UE) to access XML documents stored in any XDMS. The Aggregation Proxy performs the following functions:
- Performs authentication of the XDM client.
- Routes individual XCAP requests to the correct XDMS.
- Optionally supports charging.
- Optionally performs compression/decompression over the radio interface.

A Shared XML Document Management Server (XDMS) 108 is a server entity storing and managing a generic list of URIs (Uniform Resource Identifier) that can be used by different enablers to address all list members at once.

An Enabler specific XML Document Management Server (XDMS) 104 is an XCAP server that supports the following functions:
- Performs authorization of incoming SIP and XCAP requests
- Manages XML documents, which are specific to the service enabler.
- Provides aggregation of notifications of changes to multiple documents stored on the enabler specific XDMS.
- Notifies subscribers of changes to the enabler specific documents stored in the network.

An enabler specific server 106 refers e.g. to a PoC or presence service, i.e. to the application itself. The enabler specific server 106 is further connected to a corresponding XDM server, e.g. to a PoC XDMS or to a PS XDMS.

The SIP/IP Core 110 is a network of servers, such as proxies and/or registrars that perform a variety of services in support of the XDM service, such as routing, authentication, compression, etc. The specific features offered by different types of SIP/IP Core networks will depend on the particulars of those networks.

In the conventional OMA architecture there is only one XDM server of each type. In some cases it is possible that users need to be distributed to multiple XDM servers e.g. for performance or for other reasons. If there are multiple XDM servers, the current OMA architecture does not define to which XDM server an individual request is to be forwarded or routed.

Based on the above there is an obvious need for a solution that would mitigate and/or alleviate the above drawbacks.

### SUMMARY OF THE INVENTION

According to one aspect of the invention, there is provided a method for handling a request from an XML document management client. The method comprises receiving a request from an XML document management client to access an XML document stored in an XML document management server; selecting, based on a predetermined rule, an XML document management server among a set of XML document management servers of a particular type to which the request is to be forwarded; and forwarding the request to the selected XML document management server. Although in a preferred embodiment a network element, e.g. an aggregation proxy, performs the aforementioned steps, it is also possible that some other network elements is configured to perform at least one of the steps.

The selection may be made based on XML document management client identification information included in the request and a data record in a data structure. In one embodiment of the invention, a data record in the data structure comprises XML document management client identification information and XML document management server identification information.

In one embodiment of the invention, the data structure is an internal database of the network element. In another embodiment of the invention, the data structure is an external database connected to the network element.

According to another aspect of the invention, there is provided a computer program for handling a request from an XML document management client, wherein the computer program comprises code adapted to perform the method steps disclosed above when executed on a data-processing device. In one embodiment of the invention, the computer program is embodied on a computer-readable medium.

According to another aspect of the invention, there is provided a method for managing data records. The method comprises creating at least one data record in a data structure, each data record associating an XML document management client with an XML document management server among a set of XML document management servers of a particular type. A data record may be modified by substituting the current XML document management server with a new XML document management server among the set of XML document management servers of the particular type. If needed, it is also possible to delete a data record from the data structure.

According to another aspect of the invention, there is provided a computer program for managing data records, wherein the computer program comprises code adapted to perform the method steps disclosed above when executed on a data-processing device. In one embodiment of the invention, the computer program is embodied on a computer-readable medium.

According to another aspect of the invention, there is provided a system for handling a request from an XML document management client. The system comprises an XML document management client; a set of XML document management servers of at least one particular type; a first interface configured to receive a request from an XML document management client to access an XML document stored in an XML document management server; a selecting entity configured to select, based on a predetermined rule, an XML document management server among a set of XML document management servers of the particular type to which the request is to be forwarded; and a second interface configured to forward the request to the selected XML document management server. In a preferred embodiment, a network element, e.g. an aggregation proxy, comprises at least one of the first interface, the selecting entity and the second interface.

In one embodiment of the invention, the system further comprises a data structure. In this embodiment the selecting entity is configured to select the XML document management server to which the request is to be forwarded based on XML document management client identification information included in the request and a data record in the data structure (202). In one embodiment of the invention, a data record in the data structure comprises XML document management client identification information and XML document management server identification information.

In one embodiment of the invention, the data structure is an internal database of the network element. In another embodiment of the invention, the data structure is an external database connected to the network element.

In one embodiment of the invention, the system further comprises a managing network element configured to manage the data records in the data structure.

According to another aspect of the invention, there is provided a network element for handling a request from an XML document management client. The network element comprises a first interface configured to receive a request from an XML document management client to access an XML document stored in an XML document management server; a selecting entity configured to select, based on a predetermined rule, an XML document management server among a set of XML document management servers of a particular type to which the request is to be forwarded; and a second interface configured to forward the request to the selected XML document management server.

In one embodiment of the invention, the selecting entity is configured to select the XML document management server to which the request is to be forwarded based on XML document management client identification information included in the request a data record in a data structure. In one embodiment of the invention, a data record in the data structure comprises XML document management client identification information and XML document management server identification information.

In one embodiment of the invention, the data structure is an internal database of the network element. In another embodiment of the invention, the data structure is an external database connected to the network element.

According to another aspect of the invention, there is provided a network element for managing data records. The network element is configured to create at least one data record in a data structure, each data record associating an XML document management client with an XML document management server among a set of XML document management servers of a particular type. In one embodiment of the invention, the network element is further configured to modify a data record by substituting the current XML document management server with a new XML document management server among the set of XML document management servers of the particular type. Furthermore, in one embodiment of the invention the network element is configured to delete a data record from the data structure.

The invention has a significant advantage over the prior art. Due to the invention, it is possible to determine a correct (e.g. user-specific) XDM server among a set of XDM servers of a particular type to which a user request is forwarded.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Figure 1** discloses a prior art XML document management (XDM) architecture,
**Figure 2** illustrates one embodiment of an XML document management (XDM) architecture in accordance with the invention, and
**Figure 3** illustrates a flow chart illustrating signaling between network elements.

### DETAILED DESCRIPTION OF THE INVENTION

Reference will now be made in detail to the embodiments of the present invention, examples of which are illustrated in the accompanying drawings.

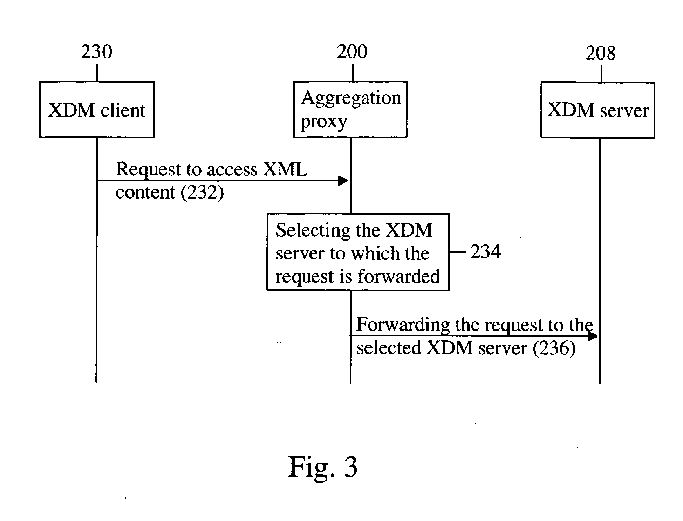

Figure 2 discloses an XML document management (XDM) architecture that incorporates the improvements of the invention. It is noted that Figure 2 discloses only those elements of the architecture that are relevant to the present invention. Figure 3 will be explained together with Figure 2.

An aggregation proxy (AP) 200 is the contact point for the XML document management client 230 implemented in user equipment (UE) to access XML documents stored in any XML document management server (XDMS). The aggregation proxy 200 performs the following functions:
- Performs authentication of the XML document management client 230.
- Routes individual XML Configuration Access Protocol (XCAP) requests to the correct XDMS. A first interface IF1 represents the portion of the aggregation proxy 200 that receives (232) requests from e.g. user equipment. A second interface IF1 represents the portion of the aggregation proxy 200 that forwards (236) the requests to XDM servers.
- Optionally supports charging.
- Optionally performs compression/decompression over the radio interface.

An enabler specific XML Document Management Server (XDMS) 204, 206, 208 is an XCAP server that supports the following functions:
- Performs authorization of incoming SIP and XCAP requests
- Manages XML documents, which are specific to the service enabler.
- Provides aggregation of notifications of changes to multiple documents stored on the enabler specific XDMS.
- Notifies subscribers of changes to the enabler specific documents stored in the network.

The aggregation proxy 200 further comprises a selecting entity DET configured to select (234), based on a predetermined rule, an XML document management server among a set of XML document management servers 204, 206, 208 of a particular type to which the request is to be forwarded. The predetermined rule may e.g. rule that the selection is made based on XML document management client 230 identification information and a data record in a data structure 202.. The data structure refers e.g. to a subscriber database that has been configured to store data records. Each data record associates an XML document management client with an XML document management server among a set of XML document management servers of a particular type. For example, if the server type is PoC server, then the data record indicates which PoC server (of a plurality of PoC servers) will receive the request from the XDM client.

The data structure or subscriber database 202 may be an integral part of the aggregation proxy 200 or alternatively, the data structure or the subscriber database 202 may be an external data structure or database that is connected to the aggregation proxy 200.

The data structure 202 includes data records that store information about associations between XDM clients and XDM servers. Figure 2 discloses a simplified example of such data records. The data structure 202 comprises three data records 210, 212, and 214. Each data record associates an XDM client with an XDM server to which a request from the XDM client is to be forwarded. XDMC1, XDMC2 and XDMC3 refer to XDM client identification information that is present in a request from a XDM client.

A man skilled in the art appreciates that the data structure 202 may contain also other information not disclosed in Figure 2. Furthermore, a man skilled in the art appreciates that the subscriber database 202 may contain any number of data records.

The improvements of the invention in the aggregation proxy 200 may be implemented with software and/or hardware. The aggregation proxy 200 may comprise a memory or memories that may include e.g. random access memories (RAM), read-only memories (ROM) etc. The memory or memories may also include other applications or software components that are not described in more detail and also may include a computer program (or portion thereof), which when executed on a data processing device performs at least some of the method steps disclosed in the invention.

In one embodiment of the invention, the data structure 202 is managed by a managing network element 216. The managing network element 216 is configured to create at least one data record in the data structure 202. As disclosed earlier, each data record associates an XML document management client with an XML document management server among a set of XML document management servers of a particular type. In another embodiment, the managing network element 216 is configured also to modify a data record by substituting the current XML document management server with a new XML document management server among the set of XML document management servers of the particular type. In other words, if the architecture is reconfigured (e.g. the number of XDM servers of the particular type changes), it may be necessary to modify (e.g. change or delete) one or more data records in the data structure 202.

Figure 2 represents the managing network element 216 as a separate network element. In another embodiment of the invention, the functionality of the managing network element 216 may be incorporated in an existing network element, e.g. in the aggregation proxy 200.

Furthermore, Figure 2 represents that the aggregation proxy 200 comprises the first interface IF1, the selecting entity 222 and the second interface IF2. In another embodiment of the invention, at least one of the aforementioned elements may the implemented within another network element than the aggregation proxy 200.

The managing network element 216 may be implemented with software and/or hardware. The managing network element 216 may comprise a memory or memories that may include e.g. random access memories (RAM), read-only memories (ROM) etc. The memory or memories may also include other applications or software components that are not described in more detail and also may include a computer program (or portion thereof), which when executed on a data processing device performs at least some of the method steps disclosed in the invention.

It is obvious to a person skilled in the art that with the advancement of technology, the basic idea of the invention may be implemented in various ways. The invention and its embodiments are thus not limited to the examples described above, instead they may vary within the scope of the claims.

## Claims

1. A method for handling a request in an XML document management architecture, wherein the method comprises:
receiving a request from an XML document management client (230) to access an XML document stored in an XML document management server (204, 206, 208);
selecting, based on a predetermined rule, an XML document management server (204, 206, 208) among a set of XML document management servers (204, 206, 208) of a particular type to which the request is to be forwarded; and
forwarding the request to the selected XML document management server (204, 206, 208).

2. The method according to claim 1, wherein at least one of the receiving, determining and forwarding steps is performed by a network element (102, 200).

3. The method according to claim 1 or 2, wherein the determining step comprises:
selecting the XML document management server (204, 206, 208) to which the request is to be forwarded based on XML document management client (230) identification information included in the request and based on a data record in a data structure (202).

4. The method according to claim 3, wherein a data record in the data structure (202) comprises XML document management client (230) identification information and XML document management server (204, 206, 208) identification information.

5. The method according to claim 3, wherein the data structure (202) is an internal database of the network element (102, 200).

6. The method according to claim 3, wherein the data structure (202) is an external database connected to the network element (102, 200).

7. A computer program for handling a request from an XML document management client, wherein the computer program comprises code adapted to perform the method steps of any of claims 1 - 7 when executed on a data-processing device.

8. The computer program according to claim 7, wherein the computer program is embodied on a computer-readable medium.

9. A method for managing data records, wherein the method comprises:
creating at least one data record in a data structure, each data record associating an XML document management client (230) with an XML document management server (204, 206, 208) among a set of XML document management servers (204, 206, 208) of a particular type.

10. The method according to claim 9, further comprising:
modifying a data record by substituting the current XML document management server (204, 206, 208) with a new XML document management server (204, 206, 208) among the set of XML document management servers (204, 206, 208) of the particular type.

11. The method according to claim 9 or 10, further comprising:
deleting a data record from the data structure.

12. A computer program for managing data records, wherein the computer program comprises code adapted to perform the method steps of any of claims 9 - 11 when executed on a data-processing device.

13. The computer program according to claim 12, wherein the computer program is embodied on a computer-readable medium.

14. A system for handling a request in an XML document management architecture, wherein the system comprises:
an XML document management client (230);
a set of XML document management servers (204, 206, 208) of at least one particular type;
a first interface (220) configured to receive a request from an XML document management client (100) to access an XML document stored in an XML document management server (204, 206, 208);
a selecting entity (222) configured to select, based on a predetermined rule, an XML document management server (204, 206, 208) among a set of XML document management servers (204, 206, 208) of the particular type to which the request is to be forwarded; and
a second interface (224) configured to forward the request to the selected XML document management server (204, 206, 208).

15. The system according to claim 14, wherein the system further comprises a network element (102, 200) comprising at least one of the first interface (220), the selecting entity (222) and the second interface (224).

16. The system according to claim 14 or 15, wherein the system further comprises a data structure (202), wherein the selecting entity (222) is configured to select the XML document management server (204, 206, 208) to which the request is to be forwarded based on XML document management client (230) identification information included in the request and a data record in the data structure (202).

17. The system according to claim 16, wherein a data record in the data structure (202) comprises XML document management client (230) identification information and XML document management server (204, 206, 208) identification information.

18. The system according to claim 16 or 17, wherein the data structure (202) is an internal database of the network element (102, 200).

19. The system according to claim 16 or 17, wherein the data structure (202) is an external database connected to the network element (102, 200).

20. The system according to any of claims 16 - 19, further comprising a managing network element (216) configured to manage the data records in the data structure (202).

21. A network element for handling a request from an XML document management client, wherein the network element comprises:
a first interface (220) configured to receive a request from an XML document management client (230) to access an XML document stored in an XML document management server (204, 206, 208);
a selecting entity (222) configured to select, based on a predetermined rule, an XML document management server (204, 206, 208) among a set of XML document management servers (204, 206, 208) of a particular type to which the request is to be forwarded; and
a second interface (224) configured to forward the request to the selected XML document management server (204, 206, 208).

22. The network element according to claim 21, wherein the selecting entity (222) is configured to select the XML document management server (204, 206, 208) to which the request is to be forwarded based on XML document management client identification information included in the request a data record in a data structure (202).

23. The network element according to claim 22, wherein a data record in the data structure (202) comprises XML document management client (230) identification information and XML document management server (204, 206, 208) identification information.

24. The network element according to claim 22, wherein the data structure (202) is an internal database of the network element (102, 200).

25. The network element according to claim 22, wherein the data structure (202) is an external database connected to the network element (102, 200).

26. A network element for managing data records, wherein the network element is configured to create at least one data record in a data structure, each data record associating an XML document management client (230) with an XML document management server (204, 206, 208) among a set of XML document management servers (204, 206, 208) of a particular type.

27. The network element according to claim 26, further configured to modify a data record by substituting the current XML document management server (204, 206, 208) with a new XML document management server (204, 206, 208) among the set of XML document management servers (204, 206, 208) of the particular type.

28. The network element according to claim 26 or 27, further configured to delete a data record from the data structure.
